# EUROPÄISCHE PATENTSCHRIFT

(11) **EP 1 314 708 B1**
(45) Veröffentlichungstag und Bekanntmachung des Hinweises auf die Patenterteilung: **11.06.2008**
(21) Anmeldenummer: 02026065.9
(22) Anmeldetag: 22.11.2002
(51) Int. Cl.: C04B 35/80, C04B 35/573, F16D 65/12, F16D 69/02

(54) **Formkörper aus faserverstärkten Verbundwerkstoffen mit segmentierter Deckschicht, seine Herstellung und seine Verwendung**
Shaped body of fibre-reinforced composite materials with a segmented covering layer, preparation and use of the same
Corps moulé de matériaux composites renforcés par des fibres et ayant une couche supérieure segmentée, la préparation et l'utilisation du même

(30) Priorität: 23.11.2001 DE 10157483
(43) Veröffentlichungstag der Anmeldung: 28.05.2003
(73) Patentinhaber: AUDI AG, 85045 Ingolstadt (DE)
(72) Erfinder: Bauer, Moritz, 86153 Augsburg (DE); Hander, Nadine, 86368 Gersthofen (DE); Kienzle, Andreas, Dr., 86672 Thierhaupten (DE); Zimmermann-Chopin, Rainer, Dr., 86679 Ellgau (DE)
(74) Vertreter: Deckers, Hellmuth Alexander

(56) Entgegenhaltungen:
- EP-A- 0 818 636
- WO-A-02/46124
- WO-A-02/070916
- DE-A- 4 003 336
- DE-A- 4 322 113
- DE-C- 4 438 455
- US-A- 6 042 935

## Beschreibung

Die Erfindung bezieht sich auf einen Formkörper aus faserverstärkten keramischen Verbundwerkstoffen, der aus einer Kernzone und mindestens einer Deckschicht aufgebaut ist und dessen Matrix überwiegend Siliciumcarbid (SiC), Silicium (Si) und Kohlenstoff (C) enthält. Die Erfindung bezieht sich auch auf ein Verfahren zum Herstellen eines Formkörpers aus faserverstärkten Verbundwerkstoffen und auf solche Formkörper, die als Reib-, Brems- oder Kupplungsscheibe ausgebildet sind. Eine besonders bevorzugte Ausführungsform der Erfindung sind Bremsscheiben aus C/SiC oder C/C-SiC, bei denen die Deckschicht einen höheren thermischen Ausdehnungskoeffizienten oder höheren SiC-Gehalt besitzt als die Kernzone.

Zu den C/SiC-Werkstoffen (mit Kohlenstofffasern verstärkte keramische Werkstoffe, deren Matrix SiC enthält) für den erfindungsgemäßen Formkörper gehören unter anderem die in den folgenden Schriften beschriebenen Werkstoffe: DE-A 198 56 721, DE-A 197 11 829 und DE-A 197 10 105.

Im allgemeinen wird zur Herstellung von C/SiC zunächst ein offenporiger kohlenstoffhaltiger Vorkörper aus Verstärkungsfasern und kohlenstoffhaltiger Matrix, im allgemeinen aus einem Kohlenstofffaser-verstärkten Kohlenstoffwerkstoff (als CFC oder C/C bezeichnet), hergestellt. Dieser wird endformnah bearbeitet und hierauf bei Temperaturen um etwa 1600 °C im Vakuum oder unter Inertgas mit einer Siliciumschmelze infiltriert, wodurch zumindest ein Teil des Kohlenstoffs der Matrix und/oder der Fasern in SiC umgewandelt wird. Hierdurch entsteht ein dichter, fester und sehr harter Werkstoff enthaltend Fasern, im allgemeinen Kohlenstofffasern, mit einer Matrix aus überwiegend SiC, Si und C. Aufgrund des Flüssigsilicierprozesses muss der Werkstoff nach der Herstellung von mindestens ca. 1600 °C auf Raumtemperatur abgekühlt werden. Innerhalb dieses Temperaturbereiches findet eine thermische Schwindung statt, die je nach thermischem Ausdehnungskoeffizienten der vorhandenen Werkstoffe deutlich unterschiedlich ausfallen kann.

Für die Herstellung von Hochleistungs-Brems- oder Reibscheiben aus C/SiC ist es üblich, den Kernkörper aus einem Grundwerkstoff mit einer Deckschicht mit speziellen Reibeigenschaften zu versehen. Eine derartige Bremsscheibe mit reibfester Deckschicht (Reibschicht) und deren Herstellverfahren ist unter anderem aus der DE-A 44 38 455 bekannt, wobei auf die Werkstoffunterschiede zwischen Kernkörper und Reibschicht nicht eingegangen wird.

Es ist bekannt, daß sich durch eine Erhöhung des SiC-Gehaltes in der Reibschicht Höhe und Gleichmäßigkeit der Reibeigenschaften verbessern lassen, und daß sich der Verschleiß der Bauteile dadurch verringern läßt. In der DE-A 198 05 868 und der EP-A-0 818 636 werden gattungsgemäße Bremsscheiben mit C/SiC-Reibschichten beschrieben, die einen gegenüber dem Kernkörper höheren SiC-Gehalt der Reibschicht aufweisen, der bis nahezu 100 % betragen kann. Die Reibschichten werden hierbei durch Silicierung von C/C-Vorkörpern erzeugt, wobei der höhere SiC-Gehalt der Reibschicht durch den Umsetzungsgrad der Silicierungsreaktion des C/C zu SiC erreicht wird; im ersten Fall durch eine höhere Reaktivität des Reibschicht-C/C's und im zweiten Fall durch eine Reduzierung des Siliciumangebotes im Kernkörper.

Aus dem nicht vorveröffentlichten Dokument WO 02/046124 A1 (EP 1 346 969 A1) ist ein Verbundwerkstoff bekannt, der ein Basismaterial enthält zusammengesetzt aus Kohlenstoff, Fasern aus Kohlenstoff und Siliciumcarbid, gekennzeichnet dadurch, daß Anteile von Verbundmaterialien enthalten sind umfassend eine Vielzahl von hervorstehenden Teilen, die auf der Oberfläche des Verbundwerkstoffs in Form von Inseln angeordnet sind und die mindestens aus Siliciumcarbid und gegebenenfalls elementarem Silicium bestehen.

Aus dem nicht vorveröffentlichten Dokument WO 02/070916 A1 ist eine Mehrschichtreibscheibe mit keramischen Reibflächen bekannt, wobei einzelne Reibflächen in Form einer keramischen Schicht auf einen Grundkörper aus faserverstärktem Kunststoff angeordnet sind, und zwischen dem Grundkörper und der keramischen Schicht eine definierte Trennfuge ausgebildet ist, die eine primäre Grundraumfläche hat, auf der zur Ausbildung einer strukturierten Oberfläche des Grundkörpers eine Vielzahl von sekundären Kleinraumflächen angeordnet ist.

Aus dem Dokument US 6,042,935 (entsprechend DE 44 38 456 A1) ist ein Reibelement bekannt, das insbesondere für Bremsen und Kupplungen anwendbar ist, und das aus einem Kernkörper und einem Reibkörper besteht, der wiederum aus einem mit Fasern aus Kohlenstoff verstärkten porösen Kohlenstoffkörper besteht, dessen Poren zumindest teilweise mit Silicium und Siliciumcarbid gefüllt sind, und der mehrere Seiten aufweist, von denen zumindest eine eine frei zugängliche Reibfläche ist, wobei der Reibkörper mit dem Kernkörper durch eine Haftschicht dauerhaft verbunden ist auf seiner der Reibfläche abgewandten Seite. In einer Rotor-Stator-Anordnung, in der jeder Rotor und jeder Stator aus Kernkörpern und beidseitig darauf angebrachten Reibkörpern besteht, können an den Außenflächen der äußersten Reibelemente radiale Vertiefungen sein, die Befestigungsrillen bilden.

C/SiC-Konstruktionswerkstoffe nach dem Verfahren der Flüssigsilicierung sind beispielsweise auch aus der DE-A 199 53 259 bekannt. Für bestimmte Anwendungen, wie Schutzplatten, ist das Aufbringen von Hartstoffschichten mit hohem SiC-Gehalt für die Verbesserung der Eigenschaften erwünscht.

Der typische thermische Ausdehnungskoeffizient dieser Siliciumcarbid-reichen Deckschichten aus SiC, SiSiC, oder C/SiC liegt im Bereich von ca. 2,5 bis 5˙10⁻⁶ K⁻¹. Der typische thermische Ausdehnungskoeffizient des Siliciumcarbid-ärmeren Kernkörpers aus C/SiC liegt dagegen im Bereich von ca. 0,5 bis 3˙10⁻⁶ K⁻¹.

Die unterschiedlichen thermischen Ausdehnungskoeffizienten führen bei der durch den Herstellprozeß der Flüssigsilicierung bedingten Abkühlung von der Siliciumschmelzetemperatur (ca. 1420 °C) auf Raumtemperatur (ca. 20 °C) zu thermisch induzierten Spannungen, von denen dann ein ausgeprägtes, mit dem Auge sichtbares Rißmuster in der Schicht resultiert.

Dieses Rissmuster ist üblicherweise vollkommen zufällig angeordnet und durch einen geringen Ordnungsgrad charakterisiert.

Die für Brems- und Reibscheiben üblichen Belastungszustände sind durch permanente Aufheiz- und Abkühlvorgänge geprägt, wodurch beim bestimmungsgemäßen Verwendungszweck der Bauteile eine fortdauernde thermische Wechsellast die Regel ist. Die hohen thermisch induzierten Spannungsspitzen werden im Werkstoff durch die Bildung weiterer Risse oder durch Wachstum bereits vorhandener Risse wieder abgebaut.

Für metallische Werkstoffe geben die Akkumulation und das Wachstum von Rissen einen Aufschluss über den Verschleißzustand, beziehungsweise die Schädigung des Materials, so daß sich die Risse als Frühindikator für das mögliche mechanische Versagen eines Bauteiles heranziehen lassen.

Ein ähnliches Verhalten weisen faserverstärkte keramische Verbundstoffe auf, wobei hier die Bildung von neuen Rissen das Wachstum bereits vorhandener Risse bei weitem überwiegt.

Nachteilig bei dem aus dem Stand der Technik bekannten Rissmuster SiC-reicher Deckschichten ist, daß sich die durch den Herstellprozess als solchem vorgegebenen Risse nicht eindeutig von durch die thermische Wechsellast neu gebildeten Rissen unterscheiden lassen. Hierdurch lassen sich die optisch erkennbaren Risse nicht zuverlässig als Frühindikator vom Werkstoffverschleiß heranziehen.

Bei C/SiC-Konstruktionswerkstoffen ist aus Gründen der Ästhetik, bei Schutzplatten insbesondere aufgrund der geforderten Funktionalität, ein ungeordnetes Rissmuster störend, denn es vermittelt den Eindruck niederer Produktqualität. Deshalb ist es erstrebenswert, das Entstehen von Rissen ganz zu vermeiden, oder diese doch wenigstens auf definierte, begrenzte Bereiche zu beschränken.

Aufgabe der vorliegenden Erfindung war es daher, Formkörper aus faserverstärkten C/SiC-Verbundwerkstoffen mit SiC-reichen Deckschichten bereitzustellen, bei denen sich während des Herstellprozesses erzeugte Risse in der Deckschicht auf zuvor festgelegte Bereiche konzentrieren und leicht von später, beim bestimmungsgemäßen Verwendungszweck des Verbundwerkstoffes durch thermische Wechselbelastung induzierten Rissen unterschieden werden können. Dabei sollen die während des Herstellprozesses erzeugten Risse bevorzugt in geordneten geometrischen Mustern angeordnet sein. Neu gebildete Risse sollen sich im unterkritischen Bereich des Werkstoffverschleißes vorzugsweise in den bereits mit Rissen durchzogenen Bereichen konzentrieren.

Erfindungsgemäß wird die Aufgabe durch Formkörper aus faserverstärkten keramischen Verbundwerkstoffen gelöst, umfassend eine Kernzone und mindestens eine Deckschicht, die einen höheren thermischen Ausdehnungskoeffizienten als die Kernzone aufweist, dadurch gekennzeichnet, daß der Verbundwerkstoff der Kernzone einen Massenanteil an Fasern von 20 % bis 60 %, einen Massenanteil an Siliciumcarbid von 30 % bis 70 %, und einen Massenanteil an Silicium von 0 % bis 30 % enthält, daß die Deckschicht einen geringeren Massenanteil an Fasern und einen höheren Massenanteil an Si und/oder SiC enthält als die Kernzone, daß die Deckschicht eine SiC-reiche Deckschicht mit einem Massenanteil an SiC von mindestens 30 % ist und in Segmente eingeteilt ist, wobei die Segmente voneinander durch Leerstellen oder Stege aus einem anderen Material als das Material der Segmente getrennt sind.

Die Größe der Segmente und deren Anbindung an den Kernkörper sind erfindungsgemäß so gewählt, daß die Segmente nahezu keine, oder keine unmittelbar erkennbaren Risse aufweisen. Das Material der Stege besitzt bevorzugt einen höheren Gehalt an SiC oder Metallcarbiden oder an Si oder Metallen als das Material der durch die Stege getrennten Segmente der Deckschicht.

Erfindungsgemäß werden die innerhalb der einzelnen Segmente auftretenden thermischen Spannungen im Vergleich zu einer zusammenhängenden Deckschicht so weit reduziert, daß sie nicht mehr zum Reißen innerhalb des Bereiches der einzelnen Segmente führen können. Da erfindungsgemäß die Stege andere Materialien als die Segmente mit unterschiedlichen thermophysikalischen Eigenschaften enthalten, ist es möglich, die auftretenden thermischen Spannungen gezielt in den Bereich der Stege abzuleiten, wobei sowohl rißhaltige als auch rißfreie Stege realisiert werden können.

Bei den erfindungsgemäßen Formkörpern wird zwischen einer Kernzone und einer Deckschicht unterschieden. Dabei soll mit dem Begriff "Deckschicht" im folgenden der in Segmente unterteilte Bereich, nicht aber die Leerstellen oder Stege zwischen den Segmenten bezeichnet werden.

Bevorzugt ist die Matrix der Kernzone und der Deckschicht überwiegend aus Si-, SiC, und C aufgebaut, und die Verstärkungsfasern sind bevorzugt ausgewählt aus der Gruppe der Kohlenstofffasern, Graphitfasern sowie Fasern enthaltend Verbindungen von mindestens zwei Elementen aus der Gruppe Si, C, B, Al, N und P.

Es ist weiter bevorzugt, daß die Deckschicht einen höheren Massenanteil an Si und/oder SiC und einen geringeren Massenanteil an Fasern enthält als die Kernzone.

Die Kernzone besteht typischerweise aus mit überwiegend durch Kurzfasern oder Kurzfaserbündeln verstärktem C/SiC. Bei den Fasern handelt es sich üblicherweise um kohlenstoffhaltige Fasern, bevorzugt Kohlenstoff- oder Graphitfasern, besonders bevorzugt mit Kohlenstoff beschichtet. Der Massenanteil an Fasern liegt im Bereich von 20 bis 60 %, der Massenanteil an SiC liegt im Bereich von 30 bis 70 % und der Massenanteil an Si liegt im Bereich von 0 bis 30 %, wobei alle Massenanteile in % bezogen sind auf die Gesamtmasse der Kernzone. Die Zusammensetzung der Deckschicht liegt typischerweise bei einem Massenanteil an Fasern im Bereich von 0 bis 35 %, der Massenanteil an SiC in der Deckschicht liegt im Bereich von 45 bis 100 % und der Massenanteil an Si in der Deckschicht liegt im Bereich von 0 bis 30 %, bezogen auf die Gesamtmasse der Deckschicht.

Für die erfindungsgemäßen Formkörper aus faserverstärkten Verbundmaterialien ist es besonders vorteilhaft, wenn der oben genannte SiC-Gehalt in der Deckschicht um mindestens 10 % höher liegt als der SiC-Gehalt in der Kernzone. Der Unterschied zwischen Kernzone und Deckschicht zeigt sich auch in der Materialdichte. Für die Kernzone ist diese typischerweise oberhalb von 1,9 g/cm³, bevorzugt zwischen 2,2 bis 2,5 g/cm³. Die Dichte der Deckschicht liegt typischerweise oberhalb von 2 g/em³, bevorzugt im Bereich von 2,3 bis 2,6 g/cm³. Vorzugsweise liegt die Dichte der Deckschicht um mindestens 5 % höher als die Dichte der Kernzone.

Je nach Anwendungsfall und Bedarf sind bei den erfindungsgemäßen Formkörpern aus faserverstärkten Verbundmaterialien unterschiedliche stoffliche Zusammensetzung und unterschiedliche Dicken der Deckschicht möglich. Für tribologische Anwendungen, wie Reibscheiben, liegt die Dicke der SiC-reichen Deckschicht üblicherweise bei mindestens 0,1 mm, bevorzugt bei mindestens 0,5 mm und besonders bevorzugt bei mindestens 1 mm. Bei Konstruktionswerkstoffen kann die Deckschicht gegebenenfalls auch im Bereich oberhalb von 3 mm liegen. Als Anwendung für die Konstruktionswerkstoffe ist beispielsweise der Automobilbau und der Luftfahrzeugbau von Interesse. Besonders bevorzugt werden aus diesen Werkstoffen auch Schutzplatten hergestellt.

Erfindungsgemäß ist die Deckschicht der Formkörper aus faserverstärkten Verbundmaterialien in Segmente aufgeteilt, die bevorzugt von regelmäßiger Struktur sind. Die Deckschicht wird in diesem Fall von sich wiederholenden Strukturelementen gebildet Dies wird dadurch erreicht, daß die Deckschicht durch Leerstellen oder Stege aus anderem Material als die Segmente in die einzelne Segmente zergliedert wird. Die einzelnen Segmente besitzen vorzugsweise überwiegend die gleiche geometrische Ausgestaltung und eine sich wiederholende Anordnung. Typische geometrische Formen sind hierbei Kreis- und Kreisring-Segmente, Waben, Rechtecke, Trapeze, Rauten und Kreise.

Einige typische geometrische Ausführungen werden anhand der folgenden Zeichnungen näher beschrieben.

Es zeigen:
- Fig.1: eine Bremsscheibe mit Blick auf die segmentierte Reibschicht
- Fig.2: Ausschnitt einer Schutzplatte mit Blick auf die segmentierte Deckschicht
- Fig.3: Ausschnitt aus einer Kupplungsscheibe mit Blick auf die segmentierte Reibschicht
- Fig.4: Ausschnitt aus einer Schutzplatte mit Blick auf die segmentierte Deckschicht
- Fig.5: Ausschnitt der Reibfläche einer Bremsscheibe mit Blick auf die segmentierte Reibschicht

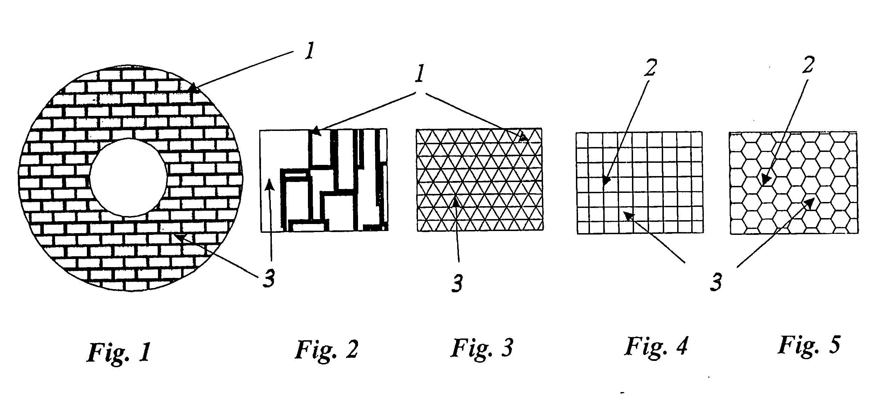

In Fig.1 ist eine Draufsicht auf eine Bremsscheibe mit segmentierter Reibschicht abgebildet Mitnahmebohrungen und Vorrichtungen zur Anbindung an den Topf sind der Übersichtlichkeit halber nicht eingezeichnet. Die Reibfläche der Bremsscheibe mit einem Außendurchmesser von 350 mm wird durch gleichgroße quadratische Segmente (**3**) gebildet, die durch Stege (**1**) voneinander getrennt sind. Die Abmessung der einzelnen Segmente liegt bei ca. 15 mm x 32 mm und die Stegbreite bei ca. 5 mm.

In Fig.2 ist die Draufsicht auf einen Ausschnitt einer Schutzplatte mit segmentierter Deckschicht zusehen. Die Deckschicht ist eine SiC-reiche Hartstoffschicht, die durch Stege (**1**) aus Metall (Aluminiumlegierung) in unregelmäßige rechteckige Segmente zerlegt ist. Die Fläche, sowie die Länge und die Breite der Segmente (**3**) ist hierbei zufällig im gewählt und liegt im Bereich von ca. 0,3 bis 36 cm² beziehungsweise 0,1 bis 6cm. Die Stegbreite liegt bei ca. 4 mm.

Fig. 3 zeigt den Ausschnitt aus einer Kupplungsscheibe in der Draufsicht. Die Deckschicht der Kupplungsscheibe ist durch Stege (**1**) in regelmäßige Segmente (**3**) in Dreiecksform unterteilt. Die Stegbreite beträgt ca. 1 mm.

Fig.4 zeigt den Ausschnitt aus einer Schutzplatte für den Einsatz als Panzerplatte in der Draufsicht Die Deckschicht der Schutzplatte ist durch Gräben (**2**) in regelmäßige Segmente (**3**) in Rechtecksform unterteilt. Die Grabenbreite beträgt ca. 1 mm.

Fig.5 zeigt den Ausschnitt aus einer Bremsscheibe in der Draufsicht. Die Reibfläche der Bremscheibe mit einem Außendurchmesser von 800 mm wird durch gleichgroße Segmente (**3**) in Form von hexagonalen Waben gebildet, die durch Gräben (**2**) voneinander getrennt sind. Der Außendurchmesser der Waben liegt bei ca. 4 cm und die Grabenbreite bei ca. 2 mm.

Der mittlere Durchmesser einzelner Segmente der erfindungsgemäßen Formkörper aus faserverstärkten Verbundmaterialien liegt im Bereich von bis zu 6 cm, bevorzugt von bis zu 4 cm und besonders bevorzugt von bis zu 3 cm. Die Fläche eines einzelnen Segmentes liegt bevorzugt im Bereich von 0,04 bis 36 cm² und besonders bevorzugt von 1 bis 25 cm².

In einer ersten Ausführungsform der Erfindung sind als Trennung zwischen den Segmenten Leerstellen in Form von Fugen vorgesehen. Dabei ist es für einige Anwendungen unerheblich, ob die Leerstellen wirklich leer sind oder mit einem Füllstoff aufgefüllt sind. Der Füllstoff sollte lediglich einen deutlich geringeren Zug- und Kompressions-Elastizitäts-Modul und deutlich geringere Festigkeit als das Material der Deckschicht aufweisen. Üblicherweise werden die Leerstellen bei der Verwendung des faserverstärkten Verbundwerkstoffes als Konstruktionswerkstoff mit Kunststoffen oder Leichtmetall ausgefüllt. Diese dienen insbesondere zum Verkleben, beziehungsweise zum Fügen mit weiteren Bauteilen.

Die zwischen den Segmenten angeordneten Fugen bzw. Leerstellen haben vorzugsweise eine Breite im Bereich von 0,1 bis 10 mm, bevorzugt von 0,5 bis 5 mm.

In einer zweiten Ausgestaltung der Erfindung sind die Segmente durch Stege voneinander getrennt, wobei das Material der Stege einen höheren thermischen Ausdehnungskoeffizienten besitzt als das Deckschichtmaterial in den Segmenten. Durch diese Wahl der thermischen Ausdehnungskoeffizienten wird erreicht, daß sich Risse bevorzugt im Bereich der Stege ausbilden. Erfindungsgemäß werden so die Risse, die beim Herstellen der Formkörper aus faserverstärkten Verbundmaterialien erzeugt werden, auf genau definierte Bereiche, nämlich den Bereich der Stege, beschränkt. Während des bestimmungsgemäßen Verwendungszweckes durch thermische Wechselbelastung neu entstehende Risse im Bereich der Segmente können so deutlich erkannt werden. Vorteilhaft ist, daß die Funktionalität der Deckschicht innerhalb der Segmente zunächst nicht von unerwünschten Rissen beeinträchtigt wird.

Je nach dem Unterschied der thermischen Ausdehnungskoeffizienten und der Bindung zwischen Kernzone und Deckschicht darf eine kritische Größe der Segmente nicht überschritten werden. Diese liegt, wie oben erwähnt bei mindestens 3 mm (mittlerem) Durchmesser, bevorzugt bei mindestens 4 mm, und insbesondere bei mindestens 6 mm.

Eine wichtige Rolle bei der Unterdrückung der Entstehung von Rissen während des Herstellprozesses in den Segmenten, beziehungsweise der Menge der entstehenden Risse, spielen die geometrischen Verhältnisse von Segmenten und Stegen oder Leerstellen. Das Verhältnis zwischen dem maximalen mittleren Durchmesser der Segmente und der Breite der benachbarten Stege oder Leerstellen liegt bevorzugt oberhalb von 2 und besonders bevorzugt oberhalb 5. Die zwischen den Segmenten angeordneten Stege haben vorzugsweise eine Breite im Bereich von 0,1 bis 10 mm, besonders bevorzugt von 0,5 bis 5 mm.

Es ist weiter bevorzugt, daß die zwischen den Segmenten der Deckschicht angeordneten Fugen oder Stege eine Breite von mindestens 0,1 mm und eine Tiefe bzw. Schichtdicke von mindestens 10 % der Schichtdicke der Deckschicht besitzen.

In einer weiteren Ausführungsform der Erfindung kann die Schichtdicke im Bereich der Stege geringer sein als die Schichtdicke der Deckschicht. In dieser Ausführungsform können die einzelnen Segmente der Deckschicht an der von der Kernzone abgewandten, frei liegenden Seite über die Stege mit geringerer Schichtdicke hinweg miteinander verbunden sein.

Insbesondere kann bei dieser Ausführungsform der Erfindung daher die Deckschicht oben, das heißt an der von der Kernzone abgewandten, frei liegenden Seite, geschlossen sein, so daß das Material der Stege nicht auf die Oberfläche der Deckschicht durchtritt. Dies ist besonders dann vorteilhaft, wenn das Material der Stege die Funktionalität des Deckschichtmaterials beeinträchtigen würde. Diese Ausführungsform der Erfindung ist beispielsweise für Reibscheiben interessant, bei denen das Material der Stege schlechte Reibeigenschaften besitzt. Um die beim Herstellprozess entstehenden Risse wirklich auf den Bereich der Stege zu konzentrieren ist es notwendig eine minimale Schichtdicke des Materials für die Stege einzustellen. Die Schichtdicke der Stege ist deshalb insbesondere größer als 10 % der Schichtdicke der Deckschicht und liegt bevorzugt im Bereich von mindestens 50 % der Schichtdicke der Deckschicht

Der thermische Ausdehnungskoeffizient des Materials für die Stege wird über dessen chemische Zusammensetzung eingestellt. Dabei wird von dem Material der Stege nicht die gleiche Funktionalität wie von dem Material der Deckschicht erwartet, da die Fläche der Segmente die Fläche der Stege weit übertrifft. Das Material der Stege ist bevorzugt, ebenso wie das Material der Segmente der Deckschicht, überwiegend aus SiC, Si und C aufgebaut, wobei der Massenanteil an Si und/oder SiC in den Stegen höher liegt als in den Segmenten der Deckschicht Vorzugsweise liegt der Massenanteil, gemessen in %, an Si- und/oder SiC in dem Material der Stege um 10 höher als der entsprechende Massenanteil in % in dem Material der Segmente.

Es ist aber auch möglich, anstelle von Si und SiC andere Metalle und/oder Metallcarbide als wesentliche Bestandteile der Stege zu verwenden. Solche Stege sind bevorzugt aufgebaut aus Metallen und/oder Metallcarbiden in einer Si-haltigen Matrix. Als Metall oder dessen Carbid können erfindungsgemäß ein oder mehrere Metalle aus der Gruppe enthaltend Ti, Cr, Fe, Co, Ni, Mo, Al, B und Zr in Frage kommen. Unter Metall sind hierbei auch deren Legierungen, insbesondere auch deren Silicide sowie Mischungen dieser Silicide zu verstehen. Als Material für die Stege sind hierbei Ti-Silicide und -Carbide, Mo-Silicide, Ti-Boride und Fe/Cr-Silicide bevorzugt, insbesondere eingebettet in eine Si-haltige Matrix.

In einer weiteren Ausführungsform der Erfindung ist der thermische Ausdehnungskoeffizient des Materials für die Stege nahezu gleich oder geringer als der thermische Ausdehnungskoeffizient der Segmente der Deckschicht. In diesem Fall ist die thermische Schwindung im Bereich der Segmente bei der Abkühlung während des Herstellprozesses des Formkörpers aus faserverstärkten Verbundmaterialien größer als im Bereich der Stege. In diesem Fall sind die Stege daher besonders arm, häufig auch ganz frei von Rissen. Diese Kombination der thermischen Ausdehnungskoeffizienten wird beispielsweise dann erreicht, wenn das Material der Deckschicht einen sehr hohen Massenanteil an SiC, insbesondere mindestens 75 %, und das Material der Stege einen hohen Massenanteil an Kohlenstoff, insbesondere mindestens 50 % aufweist.

Je nach der chemischen Zusammensetzung des Materials der Stege wird es so möglich, die Bildung von Rissen im Bereich der Segmente während der Herstellung des Formkörpers aus faserverstärkten Verbundmaterialien ganz zu vermeiden. Überraschend hat sich gezeigt, daß die Entstehung von Rissen dann ausschließlich auf den Bereich der Stege beschränkt ist, oder sogar auch dort vollkommen unterdrückt wird.

Die Erfindung betrifft auch ein Verfahren zur Herstellung von Formkörpern aus faserverstärkten Verbundwerkstoffen mit einer C/SiC-Kernzone und mindestens einer SiC-reichen Deckschicht, bei dem eine Flüssigsilicierung von mit Kohlenstoffasern verstärkten (CFC-, "Carbon Fiberreinforced Carbon" oder C/C-) Vorkörpern durchgeführt wird.

Derartige Herstellverfahren von C/SiC-Verbundkörpern sind im Stand der Technik beispielsweise aus der DE-A 198 56 721, der DE-A 199 53 259, der DE-A 197 11 829 oder der DE-A 197 10 105 bekannt.

Bei dem erfindungsgemäßen Verfahren wird zunächst eine Mischung aus kohlenstoffhaltigen Lang- oder Kurzfasern, die gebündelt sein können und/oder mit einer Beschichtung überzogen sein können, und Füllmitteln und/oder Bindemitteln, wie beispielsweise Harz und/oder Pech, hergestellt, die Mischung wird danach in bekannter Weise unter erhöhtem Druck und/oder erhöhter Temperatur (120 bis 280 °C) zu einem Vorkörper für die Kernzone geformt und gehärtet, mit einem Vormaterial für eine Deckschicht überzogen, anschließend zum Herstellen eines aus mit Kohlenstofffasern verstärktem Kohlenstoff bestehenden Formkörpers pyrolysiert oder graphitiert, der daran anschließend mit schmelzflüssigem Silicium im Vakuum oder unter Inertgas infiltriert wird. Das Kennzeichenmerkmal des erfindungsgemäßen Verfahrens ist darin zu sehen, daß auf den Vorkörper für die Kernzone vor, nach oder während des Aufbringens des Vormaterials für die Deckschicht zusätzlich das Material für die Stege oder Leerstellen, gegebenenfalls unter Formgebung und Härtung unter erhöhtem Druck und/oder erhöhter Temperatur, aufgebracht wird.

Beim Infiltrieren zumindest einer Randschicht des Formkörpers für das faserverstärkte Verbundmaterial mit dem schmelzflüssigen Silicium findet zumindest eine partielle Reaktion des Kohlenstoffs in der Deckschicht zu SiC statt, und gegebenenfalls auch des Kohlenstoffs im Material der Stege. Daraus resultiert ein Formkörper, der wenigstens in der Randschicht aus einer Verbundkeramik mit in einer Matrix aus SiC, Si und C eingebetteten, kohlenstoffhaltigen Fasern besteht (hier als C/SiC bezeichnet).

Die erfindungsgemäße Segmentierung der Deckschicht ist nicht auf den Verfahrensschritt der Flüssiginfiltration beschränkt, sondern erstreckt sich auch auf andere Herstellungsverfahren der Hochtemperatur-Matrixherstellung. Ebenso ist es also möglich, die Matrix über die gängigen Methoden der Gasphaseninfiltration (CVI), oder die Precursorpyrolyse herzustellen. Die genaue stoffliche Zusammensetzung des Formkörpers aus faserverstärkten Verbundwerkstoffen nach der Silicierung wird dabei insbesondere durch den Gehalt an Kohlenstoff und Fasern im CFC-Vorkörper eingestellt.

Der für Segmentierung bedeutsame Verfahrensschritt, die Erzeugung der Stege, soll im folgenden beispielhaft noch näher erläutert werden.

In einer ersten Ausführungsform der Erfindung wird auf den Vorkörper für die Kernzone ein Stegmuster aus einer carbonisierbaren Harzmischung, insbesondere Phenolharz aufgebracht. Dies kann beispielsweise durch Aufstreichen oder Aufdrucken, insbesondere durch Siebdruck erfolgen. Auf diese noch klebrige Harzmischung wird eine SiC-Pulvermischung mit einem Massenanteil an SiC von bevorzugt mindestens 70 % so aufgebracht, daß sie im wesentlichen nur am Steg verbleibt. Danach wird die Harzmischung mit der anhaftenden SiC-Pulvermischung ausgehärtet. Die zwischen den Stegen liegenden Segmente werden dann mit dem Material der Deckschicht gefüllt und wie beschrieben weiter verfahren. Bei der Pyrolyse wird der Binder, das carbonisierbare Harz, carbonisiert, wodurch eine poröse Kohlenstoffmatrix entsteht. Diese wird im Verfahrensschritt der Infiltration mit schmelzflüssigem Silicium zumindest teilweise zu einer festen SiC-Bindephase umgesetzt. Der Kohlenstoff-Anteil der Stege wird hierbei zu SiC oder zumindest Si/SiC umgesetzt.

In einer weiteren vorteilhaften Ausführungsform der Erfindung wird eine Mischung aus Harz und SiC-Pulvermischung hergestellt und Stege im Siebdruck auf den Vorkörper für die Kernzone aufgetragen oder aufgestrichen. Danach wird dann das Material für die Deckschicht aufgetragen.

In einer anderen Ausgestaltung der Erfindung werden Stege aus rückstandsarm oder rückstandsfrei pyrolysierbarem Kunststoff bzw. derartigen Kunststoffmischungen auf dem Vorkörper für die Kernzone angelegt, beispielsweise durch Aufkleben, Thermotransferdruck, Siebdruck, Sprühen oder Bestreichen. Im Unterschied zu den vorher beschriebenen Varianten wird aus den Stegen aus pyrolysierbarem Kunststoff während der Pyrolyse kein Kohlenstoff gebildet, sondern der Kunststoff wird durch die Hitze vollständig zersetzt. So entstehen Leerstellen, die auch bei der nachfolgenden Silicierung erhalten bleiben.

In einer weiter möglichen Ausgestaltung der Erfindung wird die Deckschicht auf den Vorkörper für die Kernzone gepreßt oder geklebt und hierauf ein die gewünschten Segmente bildendes Fugenmuster in die Deckschicht gefräst. Die Fugen können vor der Silicierung entweder mit Pulvermischungen, die mit geschmolzenem Silicium unter Bildung von Verbindungen mit höherem thermischen Ausdehnungskoeffizient als das Material der Deckschicht reagieren, zur Ausbildung von Stegen gefüllt werden, oder mit Pulvermischungen, die bei der Temperatur der Siliciuminfiltration rückstandsarm oder rückstandsfrei zersetzt werden, wodurch die Fugen auch nach der Infiltrierung mit flüssigem Silicium als Leerstellen erhalten bleiben.

Die erfindungsgemäßen Formkörper mit segmentierter Deckschicht können als Reibkörper, insbesondere als Reibscheiben eingesetzt werden, oder in Form von Platten als Schutzmaterial gegen ballistische Einwirkungen. Bei der Verwendung als Reibscheibe, insbesondere als Kupplungs- oder Bremsscheibe, ist von besonderem Vorteil, daß die Deckschichten im Neuzustand keine Risse aufweisen, und daß auf diese Weise die beim Gebrauch auftretenden Risse als Indikator für die verbliebene Lebensdauer der Reibscheibe dienen können.

## Patentansprüche

1. Formkörper aus faserverstärkten keramischen Verbundwerkstoffen, umfassend eine Kernzone und mindestens eine Deckschicht, die einen höheren thermischen Ausdehnungskoeffizienten als die Kernzone aufweist, **dadurch gekennzeichnet, daß** der Verbundwerkstoff der Kernzone einen Massenanteil an Fasern von 20 % bis 60 %, einen Massenanteil an Siliciumcarbid von 30 % bis 70 %, und einen Massenanteil an Silicium von 0 % bis 30 % enthält, daß die Deckschicht einen geringeren Massenanteil an Fasern und einen höheren Massenanteil an Si und/oder SiC enthält als die Kernzone, daß die Deckschicht eine SiC-reiche Deckschicht mit einem Massenanteil an SiC von mindestens 30 % ist und in Segmente eingeteilt ist, wobei die Segmente voneinander durch Leerstellen oder Stege aus einem anderen Material als das Material der Segmente getrennt sind.

2. Formkörper nach Anspruch 1, **dadurch gekennzeichnet, daß** die Matrix der Kernzone und der Deckschicht überwiegend aus Si-, SiC, und C aufgebaut ist, und daß die Verstärkungsfasern ausgewählt sind aus der Gruppe der Kohlenstofffasern, Graphitfasern, sowie Fasern enthaltend Verbindungen von mindestens zwei Elementen aus der Gruppe Si, C, B, Al, N und P.

3. Formkörper nach Anspruch 1 oder 2, **dadurch gekennzeichnet, daß** der Massenanteil an SiC in der Deckschicht um mindestens 10 % höher als der in der Kernzone ist.

4. Formkörper nach einem der Ansprüche 1 bis 3, **dadurch gekennzeichnet, daß** der mittlere Durchmesser der einzelnen Segmente im Bereich von bis zu 6 cm liegt und daß die mittlere Fläche der einzelnen Segmente im Bereich von 0,04 bis zu 36 cm² liegt.

5. Formkörper nach einem der Ansprüche 1 bis 4, **dadurch gekennzeichnet, daß** das Verhältnis zwischen dem mittleren Durchmesser der Segmente und der Breite der Leerstellen oder Stege im mindestens 2 beträgt.

6. Formkörper nach einem der Ansprüche 1 bis 5, **dadurch gekennzeichnet, daß** die zwischen den Segmenten der Deckschicht angeordneten Fugen oder Stege eine Breite von mindestens 0,1 mm und eine Tiefe bzw. Schichtdicke von mindestens 10 % der Schichtdicke der Deckschicht besitzen.

7. Formkörper nach einem der Ansprüche 1 bis 6, **dadurch gekennzeichnet, daß** die überwiegende Anzahl der Segmente regelmäßig angeordnet ist.

8. Formkörper nach einem der Ansprüche 1 bis 7, **dadurch gekennzeichnet, daß** das Material der Stege überwiegend aus SiC, Si und C aufgebaut ist, wobei der Massenanteil an Si und/oder SiC im Bereich der Stege höher ist als in den Segmenten der Deckschicht

9. Formkörper nach einem der Ansprüche 1 bis 8, **dadurch gekennzeichnet, daß** das Material der Stege im wesentlichen Metalle und/oder Metallcarbide enthält, bevorzugt die Elemente aus der Gruppe Ti, Cr, Fe, Co, Ni, Mo, Al, B und Zr und/oder deren Carbide.

10. Verfahren zum Herstellen eines Formkörpers nach einem der Ansprüche 1 bis 9, bei dem zunächst eine Mischung aus kohlenstoffhaltigen Lang- oder Kurzfasern, die gebündelt sein können und/oder mit einer Beschichtung überzogen sein können, und Füllmitteln und/oder Bindemitteln, wie Harz und/oder Pech, hergestellt wird, die Mischung danach unter erhöhtem Druck und/oder erhöhter Temperatur zu einem Vorkörper für die Kernzone geformt und gehärtet wird, mit einem Vormaterial für eine Deckschicht überzogen, anschließend zum Herstellen eines aus mit Kohlenstofffasern verstärktem Kohlenstoff bestehenden Formkörpers pyrolysiert oder graphitiert wird, der daran anschließend mit schmelzflüssigem Silicium unter vermindertem Druck oder unter Inertgas infiltriert wird, **dadurch gekennzeichnet, daß** auf den Vorkörper für die Kernzone vor, nach oder während des Aufbringens des Vormaterials für die Deckschicht zusätzlich Material für die Stege oder Leerstellen, gegebenenfalls unter Formgebung und Härtung unter Druck und/oder Temperatur, aufgebracht wird.

11. Verfahren nach Anspruch 10, **dadurch gekennzeichnet, daß** auf den Vorkörper für die Kernzone ein Stegmuster aus einer carbonisierbaren Harzmischung, insbesondere Phenolharz aufgebracht wird, auf diese noch klebrige Harzmischung eine SiC-Pulvermischung mit einem Massenanteil an SiC von bevorzugt mindestens 70 % so aufgebracht wird, daß sie im wesentlichen nur am Steg verbleibt, danach die Harzmischung mit der anhaftenden SiC-Pulvermischung ausgehärtet wird, anschließend die zwischen den Stegen liegenden Segmente mit dem Material der Deckschicht gefüllt werden, und der so vervollständigte Vorkörper gepresst, carbonisiert und anschließend mit flüssigem Silicium infiltriert wird.

12. Verfahren nach Anspruch 10, **dadurch gekennzeichnet, daß** zur Herstellung des Stegmusters eine Mischung aus Harz und SiC-Pulvermischung im Siebdruckverfahren auf den Vorkörper für die Kernzone aufgetragen wird.

13. Verfahren nach Anspruch 10, **dadurch gekennzeichnet, daß** Stege aus pyrolysierbarem Kunststoff oder pyrolysierbaren Kunststoffmischungen auf den Vorkörper für die Kernzone aufgetragen werden.

14. Verfahren zum Herstellen eines Formkörpers nach einem der Ansprüche 1 bis 9, bei dem zunächst eine Mischung aus kohlenstoffhaltigen Lang- oder Kurzfasern, die gebündelt sein können und/oder mit einer Beschichtung überzogen sein können, und Füllmitteln und/oder Bindemitteln, wie Harz und/oder Pech, hergestellt wird, die Mischung danach unter erhöhtem Druck und/oder erhöhter Temperatur zu einem Vorkörper für die Kernzone geformt und gehärtet wird, mit einem Vormaterial für eine Deckschicht überzogen, anschließend zum Herstellen eines aus mit Kohlenstofffasern verstärktem Kohlenstoff bestehenden Formkörpers pyrolysiert oder graphitiert wird, **dadurch gekennzeichnet, daß** nach der Pyrolyse oder Graphitierung ein Segmente bildendes Fugenmuster in die Deckschicht gefräst und anschließend der so bearbeitete Formkörper mit schmelzflüssigem Silicium unter vermindertem Druck oder unter Inertgas infiltriert wird.

15. Verfahren nach Anspruch 14, **dadurch gekennzeichnet, daß** die Fugen vor der Siliciuminfiltration mit Pulvermischungen zur Ausbildung von Stegen gefüllt werden.

16. Verfahren zum Herstellen eines Formkörpers nach einem der Ansprüche 1 bis 9, bei dem zunächst eine Mischung aus kohlenstoffhaltigen Lang- oder Kurzfasern, die gebündelt sein können und/oder mit einer Beschichtung überzogen sein können, und Füllmitteln und/oder Bindemitteln, wie Harz und/oder Pech, hergestellt wird, die Mischung danach unter erhöhtem Druck und/oder erhöhter Temperatur zu einem Vorkörper für die Kernzone geformt und gehärtet wird, dieser Vorkörper mit einer Deckschicht auf mindestens einer Seite versehen wird, wobei Kernzone und Deckschicht(en) durch Pressen oder Verkleben miteinander verbunden werden, und anschließend zur Bildung von Segmenten in der Deckschicht ein Fugenmuster in die Deckschicht(en) gefräst wird, wonach der so bearbeitete Formkörper mit flüssigem Silicium unter vermindertem Druck oder unter Inertgas infiltriert wird.

17. Verfahren nach Anspruch 16, **dadurch gekennzeichnet, daß** die Fugen mit Pulvermischungen, die mit geschmolzenem Silicium unter Bildung von Verbindungen mit höherem thermischen Ausdehnungskoeffizient als das Material der Deckschicht reagieren, zur Ausbildung von Stegen gefüllt werden.

18. Verfahren nach Anspruch 16, **dadurch gekennzeichnet, daß** die Fugen mit Pulvermischungen gefüllt werden, die bei der Temperatur der Siliciuminfiltration rückstandsarm oder rückstandsfrei zersetzt werden, wodurch die Fugen auch nach der Infiltrierung mit flüssigem Silicium als Leerstellen erhalten bleiben.

19. Verwendung eines Formkörpers nach einem der Ansprüche 1 bis 9 als Reibkörper.

20. Verwendung eines Formkörpers nach einem der Ansprüche 1 bis 9 als Reibscheibe, insbesondere Bremsscheibe oder Kupplungsscheibe.

21. Verwendung eines Formkörper nach einem der Ansprüche 1 bis 9 als Schutzplatte.

## Claims

1. A shaped body made from fibre-reinforced ceramic composite materials, comprising a core zone and at least one covering layer which has a higher coefficient of thermal expansion than the core zone, **characterised in that** the composite material of the core zone has a mass fraction of fibres of from 20 % to 60 %, a mass fraction of silicon carbide of from 30 % to 70 %, and a mass fraction of silicon of from 0 % to 30 %, the covering layer has a smaller mass fraction of fibres and a larger mass fraction of silicon and/or of silicon carbide than the core zone, the covering layer is a covering layer rich in silicon carbide having a mass fraction of silicon carbide of at least 30 %, and is divided into segments wherein the segments are separated from each other by gaps or by bridging zones of a material which is different from the material of the segments.

2. The shaped body as claimed in claim 1, wherein the matrix of the core zone and of the covering layer is made up predominantly of Si, SiC and C and the reinforcing fibres are selected from the group consisting of carbon fibres, graphite fibres and fibres comprising compounds of at least two elements from the group consisting of Si, C, B, Al, N and P.

3. The shaped body as claimed in claim 1 or 2, wherein the mass fraction of silicon carbide in the covering layer is by at least 10 % higher than that of the core zone.

4. The shaped body as claimed in any of claims 1 to 3, wherein the mean diameter of the individual segments is in the range up to 6 cm and the mean area of the individual segments is in the range from 0.04 cm² to 36 cm².

5. The shaped body as claimed in any of claims 1 to 4, wherein the ratio of the mean diameter of the segments and the width of the gaps or bridging zones is at least 2.

6. The shaped body as claimed in any of claims 1 to 5, wherein the gaps or bridging zones located between the segments of the covering layer have a width of at least 0.1 mm and a depth or layer thickness of at least 10 % of the thickness of the covering layer.

7. The shaped body as claimed in any of claims 1 to 6, wherein the majority of the segments are arranged regularly.

8. The shaped body as claimed in any of claims 1 to 7, wherein the material of the bridging zones is made up predominantly of SiC, Si and C, with the mass fraction of Si and/or SiC in the region of the bridging zones being higher than in the segments of the covering layer.

9. The shaped body as claimed in any of claims 1 to 8, wherein the material of the bridging zones comprises essentially metals and/or metal carbides, preferably the elements of the group consisting of Ti, Cr, Fe, Co, Ni, Mo, Al, B and Zr and/or their carbides.

10. A process for producing a shaped body as claimed in any of claims 1 to 9, in which a mixture of carbon-containing long fibres or short fibres, which may be collected into bundles and/or be coated with a coating, and fillers and/or binders, for example resin and/or pitch, is firstly prepared, the mixture is then shaped and cured in a known manner under pressure and/or at elevated temperature to form an intermediate body for the core zone, this is coated with a precursor material for a covering layer, subsequently pyrolysed or graphitised to produce a shaped body comprising carbon reinforced with carbon fibres which is subsequently infiltrated with molten silicon under reduced pressure or under inert gas, wherein the material for the bridging zones or gaps is additionally applied, if appropriate with shaping and curing under pressure and/or elevated temperature, to the intermediate body for the core zone before, after or during the application of the precursor material for the covering layer.

11. The process as claimed in claim 10, wherein a pattern of bridging zones of a carbonisable resin mixture, in particular phenolic resin, is applied to the intermediate body for the core zone, a SiC powder mixture having a mass fraction of SiC of preferably at least 70 % is applied to this still sticky resin mixture in such a way that it remains essentially only on the bridging zone, the resin mixture to which the SiC powder mixture is adhering is cured, the segments located between the bridging zones are subsequently filled with the material of the covering layer and the then complete intermediate body is pressed, carbonised and subsequently infiltrated with liquid silicon.

12. The process as claimed in claim 10, wherein a mixture of resin and SiC powder mixture is applied by screen printing to the intermediate body for the core zone to produce the pattern of bridging zones.

13. The process as claimed in claim 10, wherein bridging zones of pyrolysable polymer or of pyrolysable polymer mixtures are applied to the intermediate body for the core zone.

14. A process for producing a shaped body as claimed in any of claims 1 to 9, in which a mixture of carbon-containing long fibres or short fibres, which may be collected into bundles and/or be coated with a coating, and fillers and/or binders, for example resin and/or pitch, is firstly prepared, the mixture is then shaped and cured in a known manner under pressure and/or at elevated temperature to form an intermediate body for the core zone, this is coated with a precursor material for a covering layer, subsequently pyrolysed or graphitised to produce a shaped body comprising carbon reinforced with carbon fibres, wherein a pattern of grooves forming segments is milled into the covering layer after pyrolysis or graphitisation and the shaped body which has been machined in this way is subsequently infiltrated with molten silicon under reduced pressure or under inert gas.

15. The process as claimed in claim 14, wherein the grooves are filled with powder mixtures for the formation of bridging zones prior to the silicon infiltration.

16. A process for producing a shaped body as claimed in any of claims 1 to 9, in which a mixture of carbon-containing long fibres or short fibres, which may be collected into bundles and/or be coated with a coating, and fillers and/or binders, for example resin and/or pitch, is firstly prepared, the mixture is then shaped and cured in a known manner under pressure and/or at elevated temperature to form an intermediate body for the core zone, this intermediate body is provided on at least one side with a covering layer, with core zone and covering layer(s) being joined to one another by pressing or adhesive bonding, and a pattern of grooves is subsequently milled into the covering layer(s) to form segments in the covering layer, after which the shaped body which has been machined in this way is infiltrated with liquid silicon under reduced pressure or under inert gas.

17. The process as claimed in claim 16, wherein the grooves are filled with powder mixtures which react with molten silicon to form compounds having a coefficient of thermal expansion which is higher than that of the material of the carbon layer so as to form bridging zones.

18. The process as claimed in claim 16, wherein the grooves are filled with powder mixtures which are decomposed so as to leave little or no residue at the temperature of the silicon infiltration, as a result of which the grooves are retained as gaps even after the infiltration with liquid silicon.

19. The use of a shaped body as claimed in any of claims 1 to 9 as a friction body.

20. The use of a shaped body as claimed in any of claims 1 to 9 as a friction disk, in particular a brake disk or clutch disk.

21. The use of a shaped body as claimed in any of claims 1 to 9 as a protective plate.

## Revendications

1. Corps moulé à base de matériaux composites céramiques renforcés avec des fibres, comprenant une zone centrale et au moins une couche de recouvrement qui présente un coefficient de dilatation thermique plus élevé que la zone centrale, **caractérisé en ce que** le matériau composite de la zone centrale a une teneur en fibres de 20 % à 60 % en masse, une teneur en carbure de silicium de 30 % à 70 % en masse et une teneur en silicium de 0 % à 30 % en masse, **en ce que** la couche de recouvrement a une plus faible teneur massique en fibres et une plus forte teneur massique en Si et/ou SiC que la zone centrale, **en ce que** la couche de recouvrement est divisée en une couche de recouvrement riche en SiC, ayant une teneur en SiC d'au moins 30 % en masse et en segments, les segments étant séparés les uns des autres par des espaces vides ou des nervures d'un matériau différent du matériau des segments.

2. Corps moulé selon la revendication 1, **caractérisé en ce que** la matrice de la zone centrale et de la couche de recouvrement est essentiellement constituée de Si, SiC et C, et **en ce que** les fibres de renfort sont choisies dans le groupe constitué par les fibres de carbone, les fibres de graphite, ainsi que les fibres contenant des composés d'au moins deux éléments choisis parmi Si, C, B, Al, N et P.

3. Corps moulé selon la revendication 1 ou 2, **caractérisé en ce que** la teneur massique en SiC de la couche de recouvrement est supérieure d'au moins 10 % à celle de la zone centrale.

4. Corps moulé selon l'une quelconque des revendications 1 à 3, **caractérisé en ce que** le diamètre moyen des segments individuels se situe dans la plage allant jusqu'à 6 cm et **en ce que** la surface moyenne des segments individuels se situe dans la plage allant de 0,04 à 36 cm².

5. Corps moulé selon l'une quelconque des revendications 1 à 4, **caractérisé en ce que** le rapport entre le diamètre moyen des segments et la largeur des espaces vides ou des nervures est égal au moins à 2.

6. Corps moulé selon l'une quelconque des revendications 1 à 5, **caractérisé en ce que** les rainures ou nervures disposées entre les segments de la couche de recouvrement ont une largeur d'au moins 0,1 mm et une profondeur ou, respectivement, une épaisseur de couche représentant au moins 10 % de l'épaisseur de la couche de recouvrement.

7. Corps moulé selon l'une quelconque des revendications 1 à 6, **caractérisé en ce que** la majorité des segments sont disposés de façon régulière.

8. Corps moulé selon l'une quelconque des revendications 1 à 7, **caractérisé en ce que** le matériau des nervures est essentiellement constitué de SiC, Si et C, la proportion en masse de Si et/ou SiC dans la zone des nervures étant plus élevée que dans les segments de la couche de recouvrement.

9. Corps moulé selon l'une quelconque des revendications 1 à 8, **caractérisé en ce que** le matériau des nervures contient essentiellement des métaux et/ou des carbures métalliques, de préférence les éléments du groupe constitué par Ti, Cr, Fe, Co, Ni, Mo, Al, B et Zr et/ou leurs carbures.

10. Procédé pour la fabrication d'un corps moulé selon l'une quelconque des revendications 1 à 9, dans lequel d'abord on prépare un mélange de fibres courtes ou longues contenant du carbone, qui peuvent être en faisceau et/ou munies d'un revêtement, et de charges et/ou de liants, tels qu'une résine et/ou de la poix, puis le mélange est mis en forme et durci sous une pression élevée et/ou à une température élevée, pour donner un pré-corps pour la zone centrale, qui est revêtu avec un pré-matériau pour une couche de recouvrement, ensuite est soumis à une pyrolyse ou à une transformation en graphite, pour la fabrication d'un corps moulé constitué de carbone, renforcé avec des fibres de carbone, qui est ensuite infiltré, sous pression réduite ou sous un gaz inerte, avec du silicium fondu, **caractérisé en ce qu'**avant, pendant ou après l'application du pré-matériau pour la couche de recouvrement on applique en outre sur le pré-corps pour la zone centrale du matériau pour les nervures ou les espaces vides, éventuellement avec formage et durcissement sous pression et/ou à température élevée.

11. Procédé selon la revendication 10, **caractérisé en ce qu'**on applique sur le pré-corps sur la zone centrale un modèle de nervure à base d'une composition de résine carbonisable, en particulier une résine phénolique, on applique encore sur cette composition de résine encore collante un mélange pulvérulent à base de SiC, ayant une teneur en SiC de préférence d'au moins 70 % en masse, de sorte qu'il ne reste essentiellement que sur la nervure, puis on fait durcir la composition de résine avec le mélange pulvérulent à base de SiC y adhérant, ensuite on remplit avec le matériau de la couche de recouvrement les segments se trouvant entre les nervures, et le pré-corps ainsi complété est pressé, carbonisé et ensuite infiltré avec du silicium liquide.

12. Procédé selon la revendication 10, **caractérisé en ce que** pour la production du modèle de nervure on applique sur le pré-corps pour la zone centrale un mélange de résine et de mélange pulvérulent à base de SiC, dans le procédé de sérigraphie.

13. Procédé selon la revendication 10, **caractérisé en ce que** sur le pré-corps pour la zone centrale on applique des nervures en matière plastique apte à la pyrolyse ou des mélanges de matières plastiques aptes à la pyrolyse.

14. Procédé pour la fabrication d'un corps moulé selon l'une quelconque des revendications 1 à 9, dans lequel d'abord on prépare un mélange de fibres courtes ou longues contenant du carbone, qui peuvent être en faisceau et/ou munies d'un revêtement, et de charges et/ou de liants, tels qu'une résine et/ou de la poix, puis le mélange est mis en forme et durci sous une pression élevée et/ou à une température élevée, pour donner un pré-corps pour la zone centrale, qui est revêtu avec un pré-matériau pour une couche de recouvrement, ensuite, pour la fabrication d'un corps moulé constitué de carbone, renforcé avec des fibres de carbone, est soumis à une pyrolyse ou à une transformation en graphite, **caractérisé en ce qu'**après la pyrolyse ou la transformation en graphite un modèle de rainure constituant un segment est fraisé dans la couche de recouvrement et ensuite le corps moulé ainsi travaillé est infiltré avec du silicium fondu, sous pression réduite ou sous un gaz inerte.

15. Procédé selon la revendication 14, **caractérisé en ce qu'**avant l'infiltration de silicium les rainures sont remplies avec des mélanges pulvérulents pour la formation de nervures.

16. Procédé pour la fabrication d'un corps moulé selon l'une quelconque des revendications 1 à 9, dans lequel d'abord on prépare un mélange de fibres courtes ou longues contenant du carbone, qui peuvent être en faisceau et/ou munies d'un revêtement, et de charges et/ou de liants, tels qu'une résine et/ou de la poix, puis le mélange est mis en forme et durci sous une pression élevée et/ou à une température élevée, pour donner un pré-corps pour la zone centrale, ce pré-corps est muni d'une couche de recouvrement sur au moins un côté, zone centrale et couche(s) de recouvrement étant liées ensemble par pressage ou collage, et ensuite, pour la formation de segments dans la couche de recouvrement, un modèle de rainure est fraisé dans la/les couche(s) de recouvrement, à la suite de quoi le corps moulé ainsi travaillé est infiltré avec du silicium liquide, sous pression réduite ou sous un gaz inerte.

17. Procédé selon la revendication 16, **caractérisé en ce que** les rainures sont remplies avec des mélanges pulvérulents qui réagissent avec le silicium fondu, avec formation de composés à plus haut coefficient de dilatation thermique que le matériau de la couche de recouvrement, pour la formation de nervures.

18. Procédé selon la revendication 16, **caractérisé en ce que** les rainures sont remplies avec des mélanges pulvérulents qui sont décomposés à la température de l'infiltration de silicium, en laissant peu de résidu ou sans laisser de résidu, de sorte que même après l'infiltration avec le silicium liquide, les rainures restent sous forme d'espaces vides.

19. Utilisation d'un corps moulé selon l'une quelconque des revendications 1 à 9, en tant que corps de friction.

20. Utilisation d'un corps moulé selon l'une quelconque des revendications 1 à 9, en tant que disque de friction, en particulier disque de frein ou disque d'embrayage.

21. Utilisation d'un corps moulé selon l'une quelconque des revendications 1 à 9, en tant que plaque de protection.
